# EUROPEAN PATENT APPLICATION

(11) **EP 3 418 508 A1**
(43) Date of publication of application: **26.12.2018**
(21) Application number: 17461554.2
(22) Date of filing: 22.06.2017
(51) Int. Cl.: F01D 25/30, F02C 7/24, F01N 1/08

(54) **PROTECTIVE BAFFLES FOR GAS TURBINE NOISE ATTENUATION SYSTEM**

(71) Applicant: General Electric Company, Schenectady, NY 12345 (US)
(72) Inventor: POLCWIARTEK, Marcin, 02-256 Warsaw (PL); DUDEK, Marian, 02-256 Warsaw (PL); BABIUCH, Miroslaw, 02-256 Warsaw (PL); OLZAK, Bartosz, 02-256 Warsaw (PL); WASZKIEWICZ, Aleksander, 02-256 Warsaw (PL); NAGORSKI, Arkadiusz Bartlomiej, 02-256 Warsaw (PL); DREZEK, Przemyslaw Sebastian, 02-256 Warsaw (PL); GAWLOWSKI, Sebastian, 02-256 Warsaw (PL)
(74) Representative: Patpol Kancelaria Patentowa Sp. z o.o.

(57) **Abstract**

The present application provides an exhaust system (200) to exhaust combustion gases (35) from a gas turbine engine (10). The exhaust system (200) may include an exhaust collector (130) and an exhaust stack (110) with a silencer section (150). The silencer section (150) may include a number of baffles (160) therein. The baffles (160) may include a number of nose cones (170) facing the combustion gases (35). The nose cones (170) may include a first shape (175) and a sized enhanced second shape (220).

## Description

### TECHNICAL FIELD

The present application and resultant patent relate generally to gas turbine engines and more particularly relate to a gas turbine engine with a compact exhaust system having an exhaust stack, exhaust ducts, and an exhaust noise attenuation system designed to promote a more homogeneous flow therethrough, reduced noise output, and a reduced possibility of backflow.

### BACKGROUND OF THE INVENTION

During normal operation of a gas turbine engine, one of the main aerodynamic challenges involves the efficient discharge of the high momentum combustion gas flow exiting the turbine. Although it may be aerodynamically beneficial to use a horizontal exhaust configuration, such an axial exhaust may be impractical due to the overall footprint implications. Given such, it is standard practice to use a vertical and side mounted exhaust stack that radially turns the combustion gas flow from an axial turbine. Specifically, the exhaust system ductwork may be used to direct the combustion gas flow through an exhaust noise attenuation system, *i.e*., a silencer section, and through an exhaust stack to the atmosphere. The turbine components and at least parts of the exhaust system may be positioned in an engine room for further noise reduction. The exhaust stack may vent the combustion gases as well as the ventilation air within the engine room. The exhaust system thus provides atmospheric safety and contributes to meeting acoustic emissions requirements.

The silencer section generally includes a series of baffles as the noise-attenuating elements. The performance of the silencer section may be impacted by the nature of the combustion gas flow in that a non-homogenous flow may be less effective. Moreover, the baffles may be subject to damage and/or a reduced lifetime caused by the high velocity flow. Insufficient noise reduction also may result in increasing the length of the ductwork and hence the overall costs involved in the gas turbine engine. The exhaust system also may be subject to backflow given the common venting of the combustion gases and the engine room.

### SUMMARY OF THE INVENTION

The present application thus provides an exhaust system to exhaust combustion gases from a gas turbine engine. The exhaust system may include an exhaust collector and an exhaust stack with a silencer section. The silencer section may include a number of baffles therein. The baffles may include a number of nose cones facing the combustion gases. The number of nose cones may include a first shape and a sized enhanced second shape.

The present application and the resultant patent further provide a method of operating an exhaust system for combustion gases from a gas turbine engine. The method may include the steps of accepting a flow of the combustion gases, turning the flow of the combustion gases approximately ninety degrees, flowing the combustion gases into a silencer section with a number of baffles having a first number of nose cones with a first shape and a second number of nose cones with a sized enhanced second shape, and deflecting the combustion gases off of the baffles having second number of nose cones and then the first number of nose cones to promote a homogenous flow therethrough.

These and other features and improvements of the present application and the resultant patent will become apparent to one of ordinary skill in the art upon review of the following detailed description when taken in conjunction with the several drawings and the appended claims.

### BRIEF DESCRIPTION OF THE DRAWINGS

Fig. 1 is a schematic diagram of a gas turbine engine showing a compressor, a combustor, a turbine, and an exhaust system.
Fig. 2 is a schematic side view of a silencer section of an exhaust system as may be described herein.
Fig. 3 is a schematic side view of a silencer section of an exhaust system as may be described herein.
Fig. 4 is a schematic aft/front view of the silencer section and a transition duct of an exhaust system as may be described herein.
Fig. 5 is a schematic aft view of the silencer section, the transition duct, and an exhaust stack of an exhaust system as may be described herein.

### DETAILED DESCRIPTION

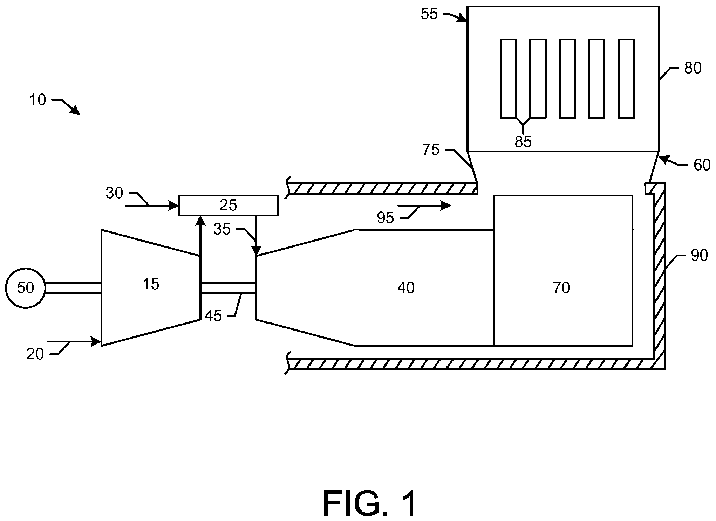

Referring now to the drawings, in which like numerals refer to like elements throughout the several views, Fig. 1 shows a schematic diagram of gas turbine engine 10 as may be used herein. The gas turbine engine 10 may include a compressor 15. The compressor 15 compresses an incoming flow of air 20. The compressor 15 delivers the compressed flow of air 20 to a combustor 25. The combustor 25 mixes the compressed flow of air 20 with a pressurized flow of fuel 30 and ignites the mixture to create a flow of combustion gases 35. Although only a single combustor 25 is shown, the gas turbine engine 10 may include any number of combustors 25. The flow of combustion gases 35 is in turn delivered to a turbine 40. The flow of combustion gases 35 drives the turbine 40 so as to produce mechanical work. The mechanical work produced in the turbine 40 drives the compressor 15 via a shaft 45 and an external load 50 such as an electrical generator and the like.

The gas turbine engine 10 may use natural gas, liquid fuels, various types of syngas, and/or other types of fuels and blends thereof. The gas turbine engine 10 may be any one of a number of different gas turbine engines offered by General Electric Company of Schenectady, New York, including, but not limited to, those such as a 7 or a 9 series heavy duty gas turbine engine, the GE Aero Derivatives engines, and the like. The gas turbine engine 10 may have different configurations and may use other types of components. Other types of gas turbine engines also may be used herein. Multiple gas turbine engines, other types of turbines, and other types of power generation equipment also may be used herein together.

The gas turbine engine 10 may include an exhaust system 55 positioned downstream of the turbine 40. Generally described, the exhaust system 55 may include an exhaust stack 60 and an exhaust collector 70. The exhaust collector 70 may house a radial diffuser and the like to turn the hot combustion gases 35 substantially ninety degrees (90°) upward. The exhaust stack 60 may include a transition duct 75 to expand the hot combustion gases 35 and a silencer section 80 for noise attenuation. The silencer section 80 may include a number of baffles 85 therein. The hot combustion gases 35 then may be vented to the atmosphere or directed elsewhere. Other types of duct work may be used herein in any suitable size, shape, or configuration. Some of the components of the exhaust system 55 and the gas turbine engine 10 as a whole may be positioned in an engine room 90 or other type of enclosure. The exhaust system 55 thus exhausts both the hot combustion gases 35 as well as a flow of ventilation air 95 from within the engine room 90. The exhaust system 55 described herein is for the purpose of example only. Exhaust systems with many different components and many different configurations may be used herein in whole or in part.

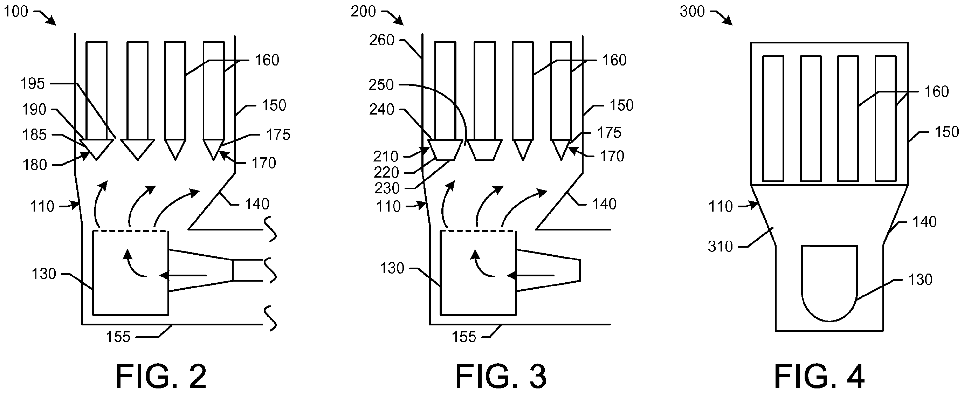

Fig. 2 shows an exhaust system 100 as may be described herein. Similar to that described above, the exhaust system 100 includes an exhaust stack 110 and an exhaust collector 130 in communication with the hot combustion gases 35. The exhaust collector 130 may house a radial diffuser and the like to turn the hot combustion gases 35 substantially ninety degrees (90°) upward. The exhaust stack 110 may include a transition duct 140 to expand the hot combustion gases 35 and a silencer section 150 for noise attenuation. Other types of duct work may be used herein in any suitable size, shape, or configuration. The components of the gas turbine engine 10 and at least some of the components of the exhaust system 100 as a whole may be positioned within an engine room 155 or other type of enclosure. Other components and other configurations may be used herein.

The silencer section 150 may have any suitable size, shape, or configuration. The silencer section 150 may have a number of baffles 160 positioned therein. Any number of the baffles 160 may be used herein in any suitable size, shape, or configuration. The baffles 160 serve to attenuate the noise produced by the combustion gases 35. The baffles 160 may be made out of stainless steel, wools, and similar materials. As described above, the baffles 160 of the silencer section 150 may face a non-homogenous flow of the combustion gases 35 as the combustion gases are turned and exit the exhaust collector 130. Moreover, at least some of the baffles 160 may face the non-homogenous flow with high energy and high noise. Such conditions may have an impact on efficient noise reduction as well as overall component lifetime.

Some of the baffles 160 herein thus may include downward facing nose cones 170 on the bottom end thereof facing the flow of combustion gases 35. Some of the nose cones 170 may have a first or a substantially pyramidal-like shape 175 although any suitable shape may be used herein. Some of the baffles 160 may include size enhanced nose cones 180. Instead of the nose cones 170 with the pyramidal-like shape 175, the size enhanced nose cones 180 may have a second shape, *i.e*., an enhanced width 185 facing the flow of the combustion gases 35. Specifically, the size enhanced width 185 may include an offset area 190 extending beyond the width of the baffles 160. The offset area 190 thus may create a narrow passage 195 between the size enhanced nose cones 180. The narrow passage 195 may introduce additional flow resistance therethrough. Other components and other configurations may be used herein.

The combination of the nose cones 170 and the size enhanced nose cones 180 may help to deflect the high velocity combustion gas stream 35 from the baffle walls so as to extend the lifetime thereof. The narrow passages 195 also may introduce additional flow resistance. As a result, the flow of combustion gases 35 may be redistributed towards the walls of the transition duct 140 so as to promote a more homogeneous flow with less velocity. In other words, the size enhanced nose cones 180 may be positioned in a higher velocity zone as compared to the remaining baffles 160 with the smaller nose cones 170.

The use of the size enhanced nose cones 180 with the enhanced width 185 and the offsets 190 forming the narrow passages 195 thus may create the flow resistance for the higher momentum flow and consequently redirects the flow towards regions of lower velocity and lower resistance for improved overall noise attenuation and component lifetime. Specifically, a more homogenous flow of the combustion gases 35 improves overall noise reduction. Moreover, the nose cones 170, 180 may be integral with the baffles 160 and thus may avoid the use of additional downstream deflectors and other structure that may increase overall costs. Other components and other configurations may be used herein.

Fig. 3 shows an exhaust system 200 as may be described herein. Similar to the exhaust system 100 described above in Fig. 2, the exhaust system 200 includes the exhaust stack 110 and the exhaust collector 130 in communication with the hot combustion gases 35. The exhaust collector 130 may house a radial diffuser and the like to turn the hot combustion gases 35 substantially ninety degrees (90°) upward. The exhaust stack 110 may include the transition duct 140 to expand the hot combustion gases 35 and the silencer section 150 for noise attenuation. Other types of duct work may be used herein in any suitable size, shape, or configuration. The components of the gas turbine engine 10 and at least some of the components of the exhaust system 200 as a whole may be positioned within the engine room 155 or other type of enclosure. Other components and other configurations may be used herein.

As above, the silencer section 150 may have any suitable size, shape, or configuration. The silencer section 150 may have a number of the baffles 160 positioned therein. Any number of the baffles 160 may be used herein in any suitable size, shape, or configuration. The baffles 160 serve to attenuate the noise produced by the combustion gases 35. Some of the baffles 160 herein thus may include a number of the downward facing nose cones 170 on the bottom end thereof facing the flow of combustion gases 35. Some of the nose cones 170 may have the first or the substantially pyramidal-like shape 175 although any suitable shape may be used herein.

In this example, some of the baffles 160 may include a further size enhanced nose cone 210. Instead of the nose cones 170 with the first or the pyramidal-like shape 175, the further size enhanced nose cones 210 may have a second shape, *i.e*., a substantially trapezoidal-like shape 220. The substantially trapezoidal-like shape 220 is described herein for the purpose of example only. Many other and different shapes may be used for the further size enhanced nose cones 210. The substantially trapezoidal like shape 220 may have a flat, blunt surface 230 facing the flow of the combustion gases 35. The flat, blunt surface 230 also may include an offset area 240 extending beyond the width of the baffles 160. The offset area 240 thus may create a narrow passage 250 between the further size enhanced nose cones 210 of the baffles 160. The narrow passages 250 thus introduce further flow resistance. Other components and other configurations may be used herein.

The combination of the nose cones 170 and the further size enhanced nose cones 210 may help to deflect the high velocity combustion gas stream 35 from the baffle walls so as to extend the lifetime thereof. Specifically, the combination may be suited to a specific velocity profile at the exhaust collector 130 and consequent flow distribution downstream. The further size enhanced nose cones 210 may be positioned about a rear wall 260 of the silencer section 150 at the upstream end of the baffles 160. The combination thus enables controlled mapping of the combustion gas stream 35 upstream of the silencer section 150 for a more uniform distribution of the flow entering the silencer section 150. The respective distribution of the nose cones 170, 210 may be determined by the location of high velocities in the stream. Increases in flow homogeneity thus increases silencer performance. Although the second shape has been described herein in terms of the substantially trapezoidal-like shape 220, other types of shapes also may be used herein. The main point is the differentiation of the size and shape of the nose cones so as to vary the overall flow resistance.

The use of the further size enhanced nose cones 210 with the substantially trapezoidal-like shape 220 or any desired shape and the offsets 240 forming the narrow passages 250 thus may create increased resistance for the high momentum flow and consequently redirects the flow towards regions of lower velocity and lower resistance for improved overall noise attenuation and component lifetime. Specifically, a more homogenous flow of the combustion gases 35 along the silencer section 150 improves overall noise reduction. Moreover, the nose cones 170, 210 may be integral with the baffles 160 and thus may avoid the use of additional downstream deflectors and other structure that may increase overall costs.

The further size enhanced nose cones 210 thus may be used in an exhaust duct for combustion gases only, for common combustion and ventilation flows, where the exhaust stack 110 may be constrained by size and weight, and where the silencer section 150 may be located in close vicinity of the exhaust collector 130 such that the flow cannot gradually decelerate and obtain a homogeneous profile. Moreover, the combination also may accommodate ducting with asymmetrical shapes upstream of the silencer section. Other components and other configurations may be used herein.

Fig. 4 shows a further embodiment of an exhaust system 300 as may be described herein. Given the use of the dedicated silencer section 150, the remainder of the exhaust stack 110 generally is not designed as a noise reducing device. The exhaust stack 110, however, may have a substantial length. The entire exhaust stack 110 or portions thereof thus may have an acoustic treatment 310 applied to the inner walls thereof. The acoustic treatment 310 may include layers of acoustic fibrous and/or reactive materials, and similar types of sound absorbing materials. The acoustic treatment 310 may be applied and secured via, for example, perforated sheets and the like. Other types of acoustic damping materials may be used herein. In this example, the acoustic treatment 310 may be applied to the transition duct 140. Other areas of the exhaust stack 110 also may be used herein. Other components and other configurations may be used herein.

The use of the acoustic treatment 310 thus may add sound insertion loss to the performance of the silencer section 150. The acoustic treatment 310 also may improve overall gas turbine engine efficiency by reducing the pressure loss through the silencer section 150. Further, the acoustic treatment 310 may help to meet noise requirements and/or loosen the design requirements of the silencer section 150 so as to save on the overall weight and size of the system. Such a savings may be significant in applications with space restraints such as in trailer mounted power generation sets and other types of mobile generation equipment.

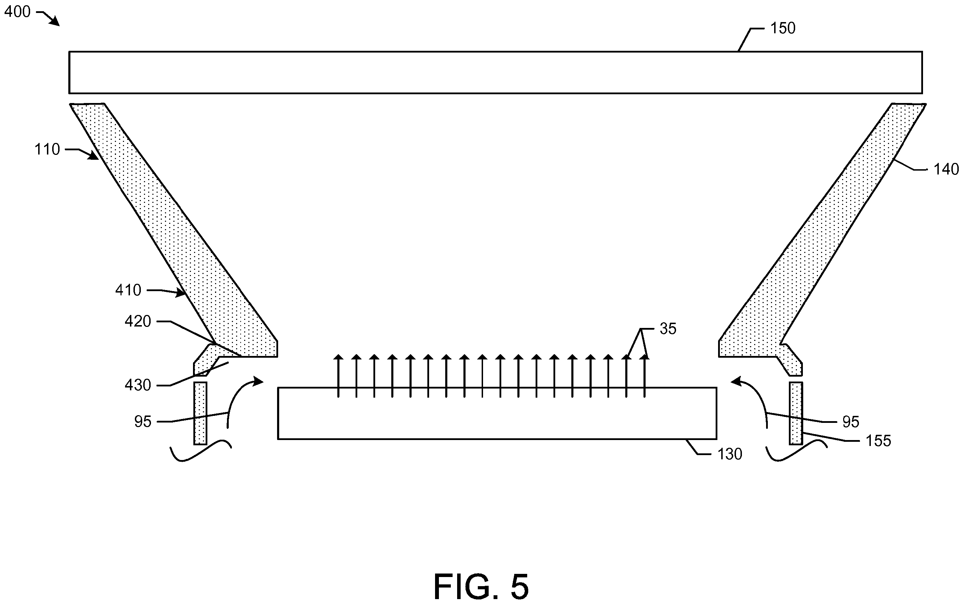

Fig. 5 shows a further embodiment of an exhaust system 400 as may be described herein. As described above, the exhaust system 400 may discharge both the hot combustion gas stream 35 from the exhaust collector 130 and the flow of ventilation air 95 from the engine room 155. Given such, a possibility of combustion gas backflow into the engine room 155 may exist along the path of the ventilation air 95. Such backflow may cause over-temperature events and equipment damage. Specifically, as the combustion gases 35 and the ventilation air 95 begin to mix within the transition duct 140, the combustion gases 35 may become detached from the walls of the transition duct 140 with rotational velocity. Such rotational velocity may create reversely oriented combustion flows therein that may escape towards the engine room 155.

The exhaust system 400 thus may include a backflow prevention system 410. The backflow prevention system 410 may be positioned adjacent to the engine room 155. Specifically, the backflow prevention system 410 may include an inwardly extending ledge 420 that defines a horizontal ventilation gap 430 between the exhaust collector 130 and the transition duct 140. The inwardly extending ledge 420 turns the ventilation flow 95 through the horizontal ventilation gap 430 and into the transition duct 140. Likewise, the ledge 420 and the gap 430 serve to block any reversely oriented combustion flows 35 from entering into the engine room 155 from the transition duct 140. Rather, any such flows 35 may be redirected to the core of the flow therethrough where the momentum of the flow may pull any reverse flow further downstream and away from the engine room 155.

The backflow prevention system 410 thus prevents the undesired backflow of combustion gases 35 into the engine room 155. The backflow prevention system 410 does so without adding components directly positioned with the hot combustion gas stream 35. As a result, the backflow prevention system 410 may increase overall system reliability with lower costs.

It should be apparent that the foregoing relates only to certain embodiments of the present application and the resultant patent. Numerous changes and modifications may be made herein by one of ordinary skill in the art without departing from the general spirit and scope of the invention as defined by the following claims and the equivalents thereof.

Parts list:
- 10: gas turbine engine

- 15: compressor
- 20: air
- 25: combustor
- 30: fuel
- 35: combustion gases
- 40: turbine
- 45: shaft
- 50: load
- 55: exhaust system
- 60: exhaust stack
- 70: radial diffuser
- 75: transition duct
- 80: silencer section
- 85: baffles
- 90: engine room
- 95: ventilation air
- 100: exhaust system
- 110: exhaust stack
- 130: exhaust collector
- 140: transition duct
- 150: silencer section
- 155: engine room
- 160: baffle
- 170: nose cones
- 175: pyramidal-like shape
- 180: enhanced nose cone
- 185: enhanced width
- 190: offset
- 195: narrow passages
- 200: exhaust system

- 210: further enhanced nose cone
- 220: substantially trapezoidal like shape
- 230: blunt surface
- 240: offset area
- 250: narrow passage
- 260: rear wall
- 300: exhaust system
- 310: acoustic treatment
- 400: exhaust system
- 410: backflow prevention system
- 420: ledge
- 430: gap

## Claims

1. An exhaust system (200) to exhaust combustion gases (35) from a gas turbine engine (10), comprising:
an exhaust collector (130); and
an exhaust stack (110);
the exhaust stack (110) comprises a silencer section (150);
the silencer section (150) comprising a plurality of baffles (160) therein;
the plurality of baffles (160) comprising a plurality of nose cones (170) facing the combustion gases (35); and
wherein the plurality of nose cones (170) comprises a first shape (175) and a size enhanced second shape (220).

2. The exhaust system (200) of claim 1, wherein the first shape (175) comprises a pyramidal-like shape (175).

3. The exhaust system (200) of claim 1, wherein the plurality of nose cones (170) with the first shape (175) face a first flow of the combustion gases (35).

4. The exhaust system (200) of claim 3, wherein the plurality of nose cones (170) with the size enhanced second shape (220) face a second flow of the combustion gases (35).

5. The exhaust system (200) of claim 4, wherein the second flow comprises a higher velocity than the first flow.

6. The exhaust system (200) of claim 1, wherein the sized enhanced second shape (220) comprises an offset area (240).

7. The exhaust system (200) of claim 6, wherein the offset area (240) of the sized enhanced second shape (220) comprises a narrow passage (250) between adjacent nose cones.

8. The exhaust system (200) of claim 1, wherein the sized enhanced second shape (220) comprises an enhanced width as compared to the first shape (175).

9. The exhaust system (200) of claim 1, wherein the exhaust stack (110) comprises a transition duct (140) between the exhaust collector (130) and the silencer section (150).

10. The exhaust system (200) of claim 1, wherein the exhaust stack (110) is positioned about an engine room (155).

11. The exhaust system (200) of claim 10, wherein the exhaust stack (110) comprises a flow of ventilation air (95) from the engine room (155).

12. The exhaust system (200) of claim 1, wherein the exhaust stack (110) comprises a backflow prevention system (410).

13. The exhaust system (200) of claim 12, wherein the backflow prevention system (410) comprises a ledge (420) defining a gap (430).

14. The exhaust system (200) of claim 1, wherein the exhaust stack (110) comprises an acoustic treatment (310) thereon.

15. A method of operating an exhaust system (200) for combustion gases (35) from a gas turbine engine (10), comprising:
accepting a flow of the combustion gases (35);
turning the flow of the combustion gases (35) approximately ninety degrees;
flowing the combustion gases (35) into a silencer section (150) with a plurality of baffles (160) having a first plurality of nose cones with a first shape (175) and a second plurality of nose cones with a sized enhanced second shape (220); and
deflecting the combustion gases (35) off of the plurality of baffles (160) having the second plurality of nose cones and then the first plurality of nose cones to promote a homogenous flow therethrough.
